# EUROPÄISCHE PATENTSCHRIFT

(11) **EP 0 613 775 B1**
(45) Veröffentlichungstag und Bekanntmachung des Hinweises auf die Patenterteilung: **09.10.1996**
(21) Anmeldenummer: 94101702.2
(22) Anmeldetag: 04.02.1994
(51) Int. Cl.: B41F 13/00

(54) **Vorrichtung zum Verhindern von Spiel zwischen einem antreibenden Zahnrad und einem getriebenen Zahnrad**
Device for preventing backlash between a driving toothed wheel and a driven toothed wheel
Dispositif pour empêcher le jeu entre un roue dentée matrice et une roue dentée menée

(30) Priorität: 04.03.1993 US 26470
(43) Veröffentlichungstag der Anmeldung: 07.09.1994
(73) Patentinhaber: Heidelberger Druckmaschinen Aktiengesellschaft, D-69115 Heidelberg (DE)
(72) Erfinder: Guaraldi, Glenn A., Kingston, NH 03848 (US); Krouse, Charles L., Madbury, NH 03820 (US); Gentle, Brian J., Rochester, NH 03867 (US)
(74) Vertreter: Stoltenberg, Heinz-Herbert Baldo

(56) Entgegenhaltungen:
- DE-A- 2 300 699
- US-A- 2 810 299

## Beschreibung

Die vorliegende Erfindung betrifft eine Vorrichtung zum Verhindern von Spiel zwischen den kämmenden Zähnen eines antreibenden Zahnrads und eines getriebenen Zahnrads. Eine solche Vorrichtung ist aus der DE-A-2 300 699 bekannt, worin die Antriebszahnräder der Zylinder eines Druckwerks abwechselnd mit einem starren und mindestens einem in Umfangsrichtung federnden, eine Verzahnung aufweisenden Element verbunden sind. Spezifisch bezieht sich die vorliegende Erfindung auf eine Vorrichtung zum Verhindern von Spiel zwischen einem mit einem Gummituchzylinder verbundenen antreibenden Zahnrad und einem mit einem Plattenzylinder verbundenen getriebenen Zahnrad in einer Druckmaschine.

Bei sehr hohen Rotationsgeschwindigkeiten der Zylinder in einer Druckmaschine besteht die Gefahr, daß sich zwischen den kämmenden Zähnen eines antreibenden Zahnrads an einem Gummituchzylinder und eines getriebenen Zahnrads an einem anliegenden Plattenzylinder Spiel ergibt, was Fehler auf dem Druckprodukt zur Folge haben kann.

Eine gemäß der vorliegenden Erfindung geschaffene Vorrichtung verhindert die Entstehung von Spiel zwischen den kämmenden Zähnen eines antreibenden Zahnrads, das um eine erste Achse in einer ersten Richtung rotierbar ist, und eines getriebenen Zahnrads, das durch das antreibende Zahnrad um eine zweite Achse in einer zweiten, der ersten Richtung entgegengesetzten Richtung rotiert wird. Die Vorrichtung umfaßt eine Einrichtung zum Ausüben einer ersten Kraft in Umfangsrichtung auf das antreibende Zahnrad. Diese erste Kraft in Umfangsrichtung zwingt das antreibende Zahnrad, sich in einer ersten Richtung zu bewegen. Die Vorrichtung umfaßt ferner eine Einrichtung zum Ausüben einer zweiten Kraft in Umfangsrichtung auf das getriebene Zahnrad. Diese zweite Kraft in Umfangsrichtung zwingt das getriebene Zahnrad, sich in einer zweiten, der ersten Richtung entgegengesetzten Richtung zu bewegen. Das entsprechend der Größe der zweiten Kraft In Umfangsrichtung auf das getriebene Zahnrad übertragene Nettodrehmoment ist gleich dem entsprechend der Größe der ersten Kraft in Umfangsrichtung auf das antreibende Zahnrad übertragene Nettodrehmoment.

Eine gemäß vorliegender Erfindung gestaltete Vorrichtung hält die Zähne des antreibenden Zahnrads und die Zähne des getriebenen Zahnrads im Eingriff miteinander, ohne das für die Rotation des antreibenden und des getriebenen Zahnrads erforderliche Drehmoment zu erhöhen. Mit dieser Vorrichtung erhöht sich das erforderliche Drehmoment deshalb nicht, weil die auf das antreibende Zahnrad und das getriebene Zahnrad übertragenen einzelnen Umfangsdrehmomente gleichwertig und entgegengesetzt zueinander gerichtet sind. Deshalb ergeben die aufgebrachten Kräfte in Umfangsrichtung keine Nettobelastung, weder auf dem antreibenden noch auf dem getriebenen Zahnrad.

In einer bevorzugten Ausführung der vorliegenden Erfindung ist das antreibende Zahnrad ein mit einem Gummituchzylinder in einem Druckwerk verbundenes Zahnrad. Das getriebene Zahnrad ist ein mit einem an den Gummituchzylinder anliegenden Plattenzylinder in dem Druckwerk verbundenes Zahnrad. Die Einrichtung zum Ausüben von Kräften in Umfangsrichtung auf das Gummituchzylinderzahnrad und das Plattenzylinderzahnrad umfaßt eine Torsionsfeder und eine Anzahl kraftübertragende Zahnräder. Die Torsionsfeder übt um ihre Achse gleichwertige Kräfte in entgegengesetzten Richtungen aus. Die kraftübertragenden Zahnräder übertragen die gleichwertigen und entgegengesetzt gerichteten Kräfte auf das Gummituchzylinderzahnrad und auf das Plattenzylinderzahnrad. Die Kraft, welche durch die kraftübertragenden Zahnräder von der Torsionsfeder auf das Gummituchzylinderzahnrad übertragen wird, ist gleichwertig und der Kraft, welche durch die kraftübertragenden Zahnräder von der Torsionsfeder auf das Plattenzylinderzahnrad übertragen wird, entgegengesetzt. Folglich verursacht die Torsionsfeder keine Nettobelastung auf dem Gummituchzylinderzahnrad oder auf dem Plattenzylinderzahnrad.

Diese und andere Merkmale der vorliegenden Erfindung werden durch die folgende Beschreibung im Zusammenhang mit den beigefügten, nachstehend erläuterten Zeichnungen weiter verdeutlicht.
- Fig. 1: ist eine schematische Darstellung eines Druckwerks gemäß der vorliegenden Erfindung;
- Fig. 2: ist eine schematische Teilansicht von Teilen des in Fig. 1 gezeigten Druckwerks; und
- Fig. 3: ist eine schematische Seitenansicht der in Fig. 2 gezeigten Druckwerkteile.

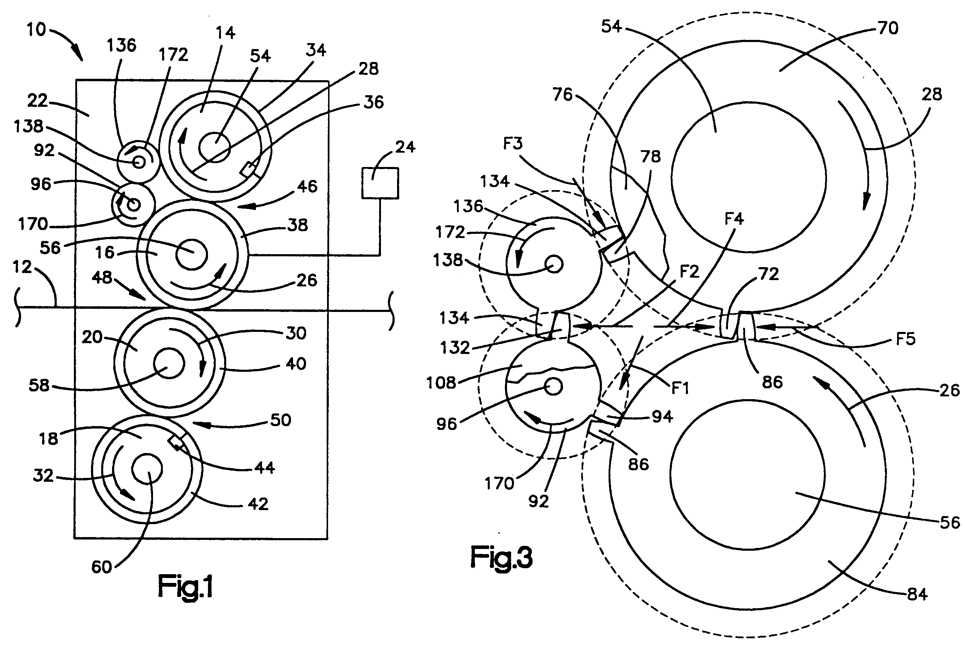

Das in Fig. 1 gezeigte Druckwerk 10 ist z. B. ein Druckwerk einer lithographischen Offsetdruckmaschine zum beidseitigen Bedrucken einer Bahn 12. Das Druckwerk 10 umfaßt einen oberen Plattenzylinder 14 und einen oberen Gummituchzylinder 16 über der Bahn 12 und einen unteren Plattenzylinder 18 und einen unteren Gummituchzylinder 20 unter der Bahn 12. Die Zylinder 14-20 sind in einem Paar Seitenwänden 22 eines Rahmens drehbar gelagert, wovon eine der Seitenwände in Fig. 1 gezeigt ist.

Ein Motor 24 treibt einen Räderzug an (nicht gezeigt), durch welchen der obere Gummituchzylinder 16 in der mit einem Pfeil 26 in Fig. 1 angedeuteten Richtung rotiert wird. Durch diesen Räderzug wird auch der obere Plattenzylinder 14 in der Richtung des Pfeils 28, der untere Gummituchzylinder 20 in der Richtung des Pfeils 30 und der untere Plattenzylinder 18 in der Richtung des Pfeils 32 rotiert.

Der obere Plattenzylinder 14 trägt eine Druckplatte 34, auf welcher das zu druckende Bild definiert ist. Die Druckplatte 34 ist eine dünne Metallplatte und durch Umwinden auf dem oberen Plattenzylinder 14 angebracht. Durch einen Spannmechanismus 36 in dem oberen Plattenzylinder 14 erfolgt eine sichere Befestigung der Druckplatte 34 auf dem oberen Plattenzylinder 14. Der obere Gummituchzylinder 16 trägt ein Gummituch 38. Das Gummituch 38 ist eine Hülse, die auf dem oberen Gummituchzylinder 16 angebracht wird, indem sie teleskopisch über diesen geschoben wird. In gleicher Weise wird ein weiteres hülsenförmiges Gummituch 40 auf dem unteren Gummituchzylinder 20 angebracht, und eine weitere Druckplatte 42 wird durch einen Spannmechanismus 44 auf dem unteren Plattenzylinder 18 befestigt.

Während die Zylinder 14-20 durch den Motor 24 und den Räderzug rotiert werden, wird Farbe auf beide Druckplatten 34 und 42 zugeführt und die Druckbilder auf den Druckplatten 34 und 42 eingefärbt. Das eingefärbte Bild auf der oberen Druckplatte 34 wird in den Druckspalt 46 zwischen dem oberen Plattenzylinder 14 und dem oberen Gummituchzylinder 16 auf das obere Gummituch 38 übertragen. Dann überträgt das obere Gummituch 38 das Druckbild in dem Druckspalt 48 zwischen dem oberen und dem unteren Gummituchzylinder 16 und 20 auf die Oberseite der Bahn 12. Die untere Druckplatte 42 überträgt ihr eingefärbtes Druckbild in dem Druckspalt 50 zwischen dem unteren Plattenzylinder 18 und dem unteren Gummituchzylinder 20 auf das untere Gummituch 40. Dann überträgt das untere Gummituch 40 das Druckbild in dem Druckspalt 48 auf die Unterseite der Bahn 12. Somit druckt das Druckwerk 10 auf beide Seiten der Bahn 12 gleichzeitig.

Der obere Plattenzylinder 14 hat einen Zapfen 54, der sich in die gegenüberliegenden Seitenwände 22 des Rahmens erstreckt, so daß der obere Plattenzylinder 14 relativ zu dem Rahmen drehbar gelagert ist. Der obere Gummituchzylinder 16 hat einen Zapfen 56, der sich in die genanntenden Seitenwände 22 des Rahmens erstreckt, so daß der obere Gummituchzylinder 16 relativ zu dem Rahmen drehbar gelagert ist. Der untere Plattenzylinder 18 hat einen Zapfen 60 und der untere Gummituchzylinder 20 hat einen Zapfen 58. Die Zapfen 58 und 60 erstrecken sich in die genannten Seitenwände 22 des Rahmens, so daß die Zylinder 18 und 20 relativ zu dem Rahmen drehbar gelagert sind.

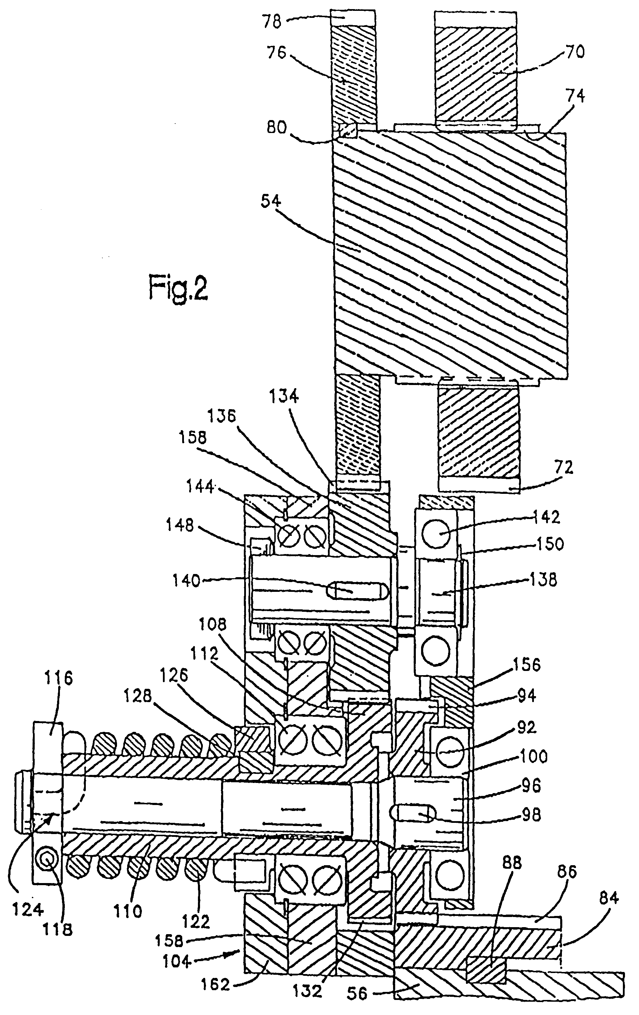

Wie in den Fig. 2 und 3 gezeigt, ist ein Zahnrad 70 mit Zähnen 72 mittels eines Keils 74 auf dem Zapfen 54 des oberen Plattenzylinders 14 angebracht. Ein Zahnrad 76 mit Zähnen 78 ist mittels einer Paßfeder 80 auf dem Zapfen 54 befestigt. Die Zahnräder 70 und 76 sind koaxial mit dem Zapfen 54 angeordnet und rotieren mit diesem. Das Gummituchzylinderzahnrad 84 mit seinen Zähnen 86 ist mittels einer Paßfeder 88 auf dem Zapfen 56 des oberen Gummituchzylinders 16 befestigt. Die Zähne 86 des Gummituchzylinderzahnrads 84 kämmen mit den Zähnen 72 des Plattenzylinderzahnrads 70, wie schematisch in Fig. 3 gezeigt.

In der bevorzugten Ausführung der Erfindung sind die Zähne 72 des Zahnrads 70 und die Zähne 86 des Zahnrads 84 eine Schrägverzahnung, und das Druckwerk 10 umfaßt ferner einen Registerverstellmechanismus (nicht gezeigt) der bekannten Art. Der Registerverstellmechanismus bewegt das Plattenzylinderzahnrad 70 axial entlang dem Keil 74. Die Schrägverzahnung der Zähne 72 bewirkt, daß das Plattenzylinderzahnrad 70 und der Zapfen 54 relativ zu dem Gummituchzylinderzahnrad 84 rotieren, wenn sich das Plattenzylinderzahnrad 70 axial entlang dem Keil 74 bewegt. Der Registerverstellmechanismus reguliert somit das Umfangsregister des von der oberen Druckplatte 34 übertragenen Bildes.

Die Zähne 94 eines Zahnrads 92 kämmen mit den Zähnen 86 des Gummituchzylinderzahnrads 84. Das Zahnrad 92 ist mittels einer Paßfeder 98 auf einer Welle 96 (Fig. 2) befestigt. Die Welle 96 ist in Lagern 100 und 112 drehbar gelagert, wie schematisch in Fig. 2 gezeigt, so daß dieser sich relativ zu einem Rahmen 104 dreht. Der Rahmen 104 ist mit einem herkömmlichen Mittel an einer Seitenwand 22 des Rahmens des Druckwerks 10 befestigt.

Ein Zahnrad 108 ist auf der Welle 96 angebracht, so daß es relativ zu der Welle 96 und dem Zahnrad 92 rotiert. Die Welle 96 erstreckt sich durch einen axialen zylindrischen Teil 110 des Zahnrads 108, das in Lagern 112 gelagert ist, wie schematisch in Fig. 2 gezeigt, so daß es relativ zu dem Rahmen 104 rotiert.

Auf der Welle 96 wird ein Ring 116 geklemmt, und zwar an dem äußeren Ende des zylindrischen Teils 110 des Zahnrads 108. Der Ring 116 wird mittels einer Schraube 118 auf der Welle 96 geklemmt, so daß dieser sich mit der Welle 96 dreht. Das eine Ende einer Torsionsfeder 122 erstreckt sich in ein Loch 124 in dem Ring 116. Das andere Ende der Torsionsfeder 122 ist mit einem Ring 126 verbunden, der mittels einer Paßfeder 128 an dem zylindrischen Teil 110 des Zahnrads 108 befestigt ist. Die Torsionsfeder 122 spannt die Zahnräder 92 und 108 vor, so daß diese in entgegengesetzten Richtungen um die Achse der Welle 96 und somit relativ zu einander rotieren.

Die Größe der Kraft der Torsionsfeder 122, die die Zahnräder 92 und 108 vorspannt, so daß diese relativ zu einander rotieren, kann reguliert werden. Diese Regulierung erfolgt, indem zuerst die Schraube 118 gedreht wird, um den Ring 116 auf der Welle 96 zu lösen. Dann kann der Ring 116, der das Zahnrad 92 mit der Torsionsfeder 122 verbindet, auf der Welle 96 gedreht werden. Indem der Ring 116 relativ zu dem Ring 126, der mit dem Zahnrad 108 verbunden ist, gedreht wird, kann die Vorspannkraft der Torsionsfeder 122 reguliert werden. Wenn eine gewünschte Vorspannkraft erreicht ist, wird mittels der Schraube 118 der Ring 116 auf der Welle 96 wieder geklemmt.

Die Zähne 132 des Zahnrads 108 kämmen mit den Zähnen 134 eines Zahnrads 136. Das Zahnrad 136 ist mittels einer Paßfeder 140 auf einer Welle 138 befestigt. Die Welle 138 ist in Lagern 142 und 144 gelagert, so daß dieser sich relativ zu dem Rahmen 104 dreht, wie schematisch in Fig. 2 gezeigt. Eine Mutter 148 wird in die Welle 138 geschraubt. Die Mutter 148 und ein Haltering 150 halten die Welle 138 in dem Rahmen 104. Die Zähne 134 des Zahnrads 136 kämmen mit den Zähnen 78 des Zahnrads 76 auf der Welle 54 des Plattenzylinders 14.

Der Rahmen 104 hat einen ersten Endteil 156, welcher die Lager 142 und 100 trägt. Ein mittlerer Teil 158 des Rahmens 104 trägt die Lager 112 und 144. Ferner trägt ein zweiter Endteil 162 des Rahmens 104 die Lager 112 und 144 und ist durch Bolzen o. ä. an dem mittleren Teil 158 und dem ersten Endteil 156 befestigt.

Der Motor 24 und der Antriebsräderzug treiben das Gummituchzylinderzahnrad 84 in der Richtung des Pfeils 26 an, wie in Fig. 3 gezeigt. Die Zähne 86 des Gummituchzylinderzahnrads 84 kämmen mit den Zähnen 72 des Plattenzylinderzahnrads 70, so daß sich letzteres in der Richtung des Pfeils 28 bewegt. Die Zähne 86 des Gummituchzylinderzahnrads 84 kämmen auch mit den Zähnen 94 des Zahnrads 92, so daß sich die Zahnräder 92 und 108 in der Richtung des Pfeils 170 bewegen. Die Zähne 132 des Zahnrads 108 und die Zähne 78 des Zahnrads 76 kämmen mit den Zähnen 134 des Zahnrads 136, so daß sich das Zahnrad 136 in der Richtung des Pfeils 172 bewegt.

Die Torsionsfeder 122 übt auf die Zahnräder 92 und 108 eine Kraft aus, die das Zahnrad 92 vorspannt, so daß dieses sich in der Richtung 170 relativ zu dem Zahnrad 108 bewegt, und die das Zahnrad 108 vorspannt, so daß dieses sich in einer der Richtung 170 entgegengesetzten Richtung relativ zu dem Zahnrad 92 bewegt. Folglich übt einer der Zähne 94 des Zahnrads 92 eine mit einem Pfeil F1 angedeutete Kraft in Umfangsrichtung auf einen der Zähne 86 des Gummituchzylinderzahnrads 84 aus. Einer der Zähne 132 des Zahnrads 108 übt eine mit einem Pfeil F2 angedeutete Kraft in Umfangsrichtung auf einen der Zähne 134 des Zanrads 136 aus. Ein weiterer der Zähne 134 des Zahnrads 136 übt eine mit einem Pfeil F3 angedeutete Kraft auf einen der Zähne 78 des Zahnrads 76 aus.

Die Kraft in Umfangsrichtung F3 wird durch die Paßfeder 80, die Welle 54 und den Keil 74 (siehe Fig. 2) auf einen der Zähne 72 des Plattenzylinderzahnrads 70 übertragen. Folglich wird eine mit dem Pfeil F4 angedeutete Kraft in Umfangsrichtung auf das Plattenzylinderzahnrad 70 entgegen seiner Drehrichtung 28 ausgeübt. Eine mit einem Pfeil F5 angedeutete Kraft in Umfangsrichtung, die der mit dem Pfeil F1 angedeuteten Kraft entspricht, wird auf das Gummituchzylinderzahnrad 84 in dessen Drehrichtung 26 ausgeübt. Die Kräfte F1-F5 sind gleichwertig. Die auf das Plattenzylinderzahnrad 70 ausgeübte Kraft und die auf das Gummituchzylinderzahnrad 84 ausgeübte Kraft bewirken, daß deren Zähne 86 und 72 im Eingriff miteinander bleiben und somit verhindert wird, daß beim Hochgeschwindigkeitsbetrieb des Druckwerks 10 ein Spiel zwischen den Zahnrädern 70 und 84 der beiden Zylinder entsteht. Da die Kräfte F4 und F5 gleichwertig und entgegengesetzt gerichtet sind, sind auch die auf das Plattenzylinderzahnrad 70 und das Gummituchzylinderzahnrad 84 übertragenen Nettodrehmomente gleichwertig und entgegengesetzt gerichtet. Folglich werden das Plattenzylinderzahnrad 70 oder das Gummituchzylinderzahnrad 84 mit keiner Nettobelastung beaufschlagt. Deshalb besteht kein Erfordernis eines zusätzlichen Drehmoments auf das Gummituchzylinderzahnrad 84 für dessen Rotation.

Wie oben beschrieben, wird durch den Registerverstellmechanismus das Plattenzylinderzahnrad 70 relativ zu dem Gummituchzylinderzahnrad 84 rotiert. Dadurch werden das Zahnrad 76, das Zahnrad 136 und das Zahnrad 108 veranlaßt, relativ zu dem Gummituchzylinderzahnrad 84 zu rotieren. Durch die Rotation des Zahnrads 108 relativ zu dem Zahnrad 92 in die eine Richtung wird die Torsionsfeder 122 gespannt, und durch die Rotation des Zahnrads 108 relativ zu dem Zahnrad 92 in der entgegengesetzten Richtung wird die Torsionsfeder 122 entspannt. Nach einem besonderen Merkmal der vorliegenden Erfindung wird die Torsionsfeder 122 vorgespannt, so daß sie in ihrem gespannten Zustand genügend Kapazität hat, um sich den durch die Betätigung des Registerverstellmechanismus bewirkten Änderungen unterziehen zu können. Zudem ist die Torsionsfeder 122 in der Weise vorgespannt, daß sie auf die Zahnräder 92 und 108 gleichwertige und entgegengesetzt gerichtete Kräfte ausüben kann (wie oben beschrieben), welche bei irgendwelchen, durch die Betätigung des Registerverstellmechanismus bewirkten Änderungen in ihrem gespannten Zustand über einer vorbestimmten Minimumgröße, vorzugsweise innerhalb eines vorbestimmten Größenbereichs bleiben. Vorzugsweise wird die Torsionsfeder 122 derart vorgespannt, daß die Spannmomente Innerhalb eines Bereichs von 1450-2000 Nm (100-140 foot pounds) aufrechterhalten bleiben.

Das Plattenzylinderzahnrad 70 rotiert auch relativ zu dem Gummituchzylinderzahnrad 84, wenn der obere Plattenzylinder 14 und der obere Gummituchzylinder 16 für das Abstellen in bekannter Weise radial voneinander wegbewegt werden. Die Torsionsfeder 122 nimmt auch eine derartige Relativbewegung des Plattenzylinderzahnrads 70 und des Gummituchzylinderzahnrads 84 auf, um die zugeordneten Kräfte innerhalb eines vorbestimmten Größenbereichs in der gleichen Weise, wie oben bezüglich des Registerverstellmechanismus beschrieben, aufrechtzuerhalten.

Obschon in der bevorzugten Ausführung der Erfindung das Zahnrad 92 mit dem Gummituchzylinderzahnrad 84 kämmt und das Zahnrad 136 durch das Zahnrad 76 effektiv mit dem Plattenzylinderzahnrad 70 kämmt, könnten die Zahnräder 92 und 108 mit dem Zahnrad 136 ausgewechselt werden, so daß das Zahnrad 92 durch das Zahnrad 76 effektiv mit dem Plattenzylinderzahnrad 70 kämmt und das Zahnrad 136 mit dem Gummituchzylinderzahnrad 84 kämmt. Ferner könnten den Zahnrädern 92, 108 und 136 ähnliche Zahnräder an dem oberen Gummituchzylinder 16 und dem unteren Gummituchzylinder 20 und/oder an dem unteren Gummituchzylinder 20 und dem unteren Plattenzylinder 18 plaziert werden.

### BEZUGSZEICHENLISTE

- 10: Druckwerk
- 12: Bahn
- 14: oberer Plattenzylinder
- 16: oberer Gummituchzylinder
- 18: unterer Plattenzylinder
- 20: unterer Gummituchzylinder
- 22: Seitenwände
- 24: Motor
- 26: Pfeil
- 28: Pfeil
- 30: Pfeil
- 32: Pfeil
- 34: Druckplatte des oberen Plattenzylinders
- 36: Spannmechanismus des oberen Plattenzylinders
- 38: hülsenförmiges Gummituch
- 40: hülsenförmiges Gummituch
- 42: Druckplatte des unteren Plattenzylinders
- 44: Spannmechanismus des unteren Plattenzylinders
- 46: Druckspalt
- 48: Druckspalt
- 50: Druckspalt
- 54: Zapfen des oberen Plattenzylinders
- 56: Zapfen des oberen Gummituchzylinders
- 58: Zapfen des unteren Gummituchzylinders
- 60: Zapfen des unteren Plattenzylinders
- 70: Plattenzylinderzahnrad
- 72: Zähne des Zahnrads 70
- 74: Keil
- 76: Zahnrad
- 78: Zähne des Zahnrads 76
- 80: Paßfeder
- 84: Gummituchzylinderzahnrad
- 86: Zähne des Zahnrads 84
- 88: Paßfeder
- 92: Zahnrad
- 94: Zähne des Zahnrads 92
- 96: Welle
- 98: Paßfeder
- 100: Lager
- 104: Rahmen
- 108: Zahnrad
- 110: zylindrischer Teil des Zahnrads 108
- 112: Lager
- 116: Ring
- 118: Schraube
- 122: Torsionsfeder
- 124: Loch in dem Ring 116
- 126: Ring
- 128: Paßfeder
- 132: Zähne des Zahnrads 108
- 134: Zähne des Zahnrads 136
- 136: Zahnrad
- 138: Welle
- 140: Paßfeder
- 142: Lager
- 144: Lager
- 148: Mutter
- 150: Haltering
- 156: erster Endteil des Rahmens 104
- 158: mittlerer Teil des Rahmens 104
- 162: zweiter Endteil des Rahmens 104
- 170: Pfeil
- 172: Pfeil

## Patentansprüche

1. Vorrichtung zum Verhindern von Spiel zwischen den kämmenden Zähnen (86, 72) eines um eine erste Achse in einer ersten Richtung (26) rotierbaren antreibenden Zahnrads (84) und eines getriebenen Zahnrads (70, 76), das durch das antreibende Zahnrad (84) um eine zweite Achse in einer zweiten, der ersten Richtung (26) entgegengesetzten Richtung (28) rotiert wird, und die Vorrichtung die folgenden Merkmale umfaßt:
eine Einrichtung zum übertragen eines ersten Drehmoments auf das antreibende Zahnrad (84), welches das antreibende Zahnrad (84) zwingt, in einer ersten Richtung (26) zu rotieren;
eine Einrichtung zum übertragen eines zweiten Drehmoments auf das getriebene Zahnrad (70, 76), welches das getriebene Zahnrad (70, 76) zwingt, in einer der zweiten Richtung (28) entgegengesetzten Richtung zu rotieren, eine Einrichtung zum Erzeugen von den Drehmomenten, wobei die Größe des zweiten Drehmoments und die Größe des ersten Drehmoments gleichwertig sind.

2. Vorrichtung gemäß Anspruch 1, welche ferner eine Einrichtung umfaßt, wodurch die Größen des genannten ersten und zweiten Drehmoments in gleicher Weise reguliert und diese Größen gleichwertig zueinander aufrechterhalten werden.

3. Vorrichtung zum Verhindern von Spiel zwischen den kämmenden Zähnen (86, 72) eines antreibenden Zahnrads (84) und eines getriebenen Zahnrads (70, 76), welche die folgenden Merkmale umfaßt:
ein erstes Zahnrad (92) mit Zähnen (94), die mit den Zähnen (86) eines (84) der antreibenden oder der getriebenen Antriebsräder (84; 70, 76) kämmen, wobei das erste Zahnrad (92) um eine erste Achse in eine erste Richtung rotierbar ist;
ein zweites Zahnrad (108), das koaxial mit dem ersten Zahnrad (92) angeordnet ist und um die erste Achse, relativ zu dem ersten Zahnrad (92) in eine, der ersten Richtung entgegengesetzte zweite Richtung rotierbar ist;
ein drittes Zahnrad (136) mit Zähnen (134) die mit den Zähnen (78) der anderen (70), 76) der antreibenden oder getriebenen Zahnräder (84; 70, 76) und mit den Zähnen (132) des zweiten Zahnrads (108) kämmen, wobei das dritte Zahnrad (136) um eine zweite Achse in eine der zweiten Richtung entgegengesetzte Richtung rotierbar ist;
und eine Einrichtung zum gleichwertigen Vorspannen des ersten und zweiten Zahnrads, so daß diese relativ zueinander in entgegengesetzte Richtungen rotieren.

4. Vorrichtung gemäß Anspruch 3,
**dadurch gekennzeichnet,**
daß die genannte Vorspanneinrichtung eine Torsionsfeder (122) ist, die zwischen dem genannten ersten und zweiten Zahnrad (92, 108) wirkt.

5. Vorrichtung gemäß Anspruch 4, welche ferner eine Einrichtung zum Regulieren der genannten Vorspanneinrichtung umfaßt, wodurch die von der genannten Vorspanneinrichtung auf das genannte erste und zweite Zahnrad (92, 108) ausgeübte Kraft reguliert wird.

6. Vorrichtung gemäß Anspruch 5, worin ferner eine Welle (96) um die genannte erste Achse rotierbar gelagert ist, das genannte erste Zahnrad (92) auf der genannten Welle (96) befestigt ist, das genannte zweite Zahnrad (108) auf der genannten Welle (96) lagert, so daß es relativ zu der genannten Welle (96) und dem genannten ersten Zahnrad (92) rotierbar ist, die genannte Torsionsfeder (122) Spiralen umfaßt, die die genannte Welle (96) umgeben, wobei ein Teil der genannten Torsionsfeder (122) mit der genannten Welle (96) und ein anderer Teil der genannten Torsionsfeder (122) mit dem genannten zweiten Zahnrad (108) verbunden ist.

7. Druckwerk, welches die folgenden Merkmale umfaßt: einen Gummituchzylinder (16), der um seine Achse in einer ersten Richtung rotierbar ist;
ein Gummituchzylinderzahnrad (84), das koaxial angeordnet und mit dem Gummituchzylinder rotierbar ist;
einen Plattenzylinder (14), der um seine Achse in einer der ersten Richtung entgegengesetzte zweiten Richtung rotierbar ist;
ein Plattenzylinderzahnrad (70, 76), das koaxial angeordnet und mit dem Plattenzylinder (14) rotierbar ist, wobei das Plattenzylinderzahnrad (70, 76) Zähne (72) aufweist, die mit den Zähnen (86) des Gummituchzylinderzahnrads (84) kämmen;
und eine Vorrichtung zum Verhindern von Spiel zwischen den Zähnen (76, 72) der Zylinderzahnräder (84); 70, 76), welche umfaßt:
ein erstes Zahnrad (92) mit Zähnen (94), die mit den Zähnen (86) eines (84) der Zylinderzahnräder (84; 70, 76) kämmen, wobei das erste Zahnrad (92) um eine erste Achse in einer der Drehrichtung des einen (84) der Zylinderzahnräder (84; 70, 76) entgegengesetzten Drehrichtung rotierbar ist;
ein zweites Zahnrad (108), das koaxial mit dem ersten Zahnrad (92) angeordnet und um die erste Achse relativ zu dem ersten Zahnrad (92) rotierbar ist;
ein drittes Zahnrad (136) mit Zähnen (134), die mit den Zähnen (78) der anderen (70, 76) der Zylinderzahnräder (84; 70, 76) und mit den Zähnen (132) des zweiten Zahnrads (108) kämmen, wobei das dritte Zahnrad (136) um eine zweite Achse in eine der Drehrichtung der anderen (70, 76) der Zylinderzahnräder (84, 70, 76) entgegensetzten Richtung rotierbar ist;
und eine Einrichtung zum gleichwertigen Vorspannen des ersten und zweiten Zahnrads (92, 108), so daß diese relativ zueinander in entgegengesetzte Richtungen rotieren.

8. Druckwerk gemäß Anspruch 7,
worin eine Einrichtung zum Regulieren der genannten Vorspanneinrichtung vorgesehen ist, um die von der genannten Vorspanneinrichtung auf das genannte erste und zweite Zahnrad (92, 108) ausgeübte Kraft zu regulieren.

9. Druckwerk gemäß Anspruch 7,
**dadurch gekennzeichnet,**
daß die genannten Zähne (86) des genannten Gummituchzylinderzahnrads (84) und die genannten Zähne (72) des genannten Plattenzylinderzahnrads (70, 76) schrägverzahnt sind.

## Claims

1. Device for preventing play between the meshing teeth (86, 72) of a driving toothed wheel (84) which can be rotated about a first axis in a first direction (26) and of a driven toothed wheel (70, 76) which is rotated by the driving toothed wheel (84) about a second axis in a second direction (28) counter to the first direction (26), and the device comprises the following features:
an arrangement for transmitting a first torque to the driving toothed wheel (84), which forces the driving toothed wheel (84) to rotate in a first direction (26);
an arrangement for transmitting a second torque to the driven toothed wheel (70, 76), which forces the driven toothed wheel (70, 76) to rotate in a direction counter to the second direction (28), an arrangement for generating the torques, the magnitude of the second torque and the magnitude of the first torque being equivalent.

2. Device according to Claim 1, which further comprises an arrangement, by means of which the magnitudes of said first and second torque are regulated in the same manner and these magnitudes are kept equivalent to one another.

3. Device for preventing play between the meshing teeth (86, 72) of a driving toothed wheel (84) and of a driven toothed wheel (70, 76), which comprises the following features:
a first toothed wheel (92) with teeth (94) which mesh with the teeth (86) of one (84) of the driving or of the driven toothed wheels (84; 70, 76), the first toothed wheel (92) being rotatable about a first axis in a first direction;
a second toothed wheel (108) which is arranged coaxially with the first toothed wheel (92) and is rotatable about the first axis, relative to the first toothed wheel (92) in a second direction counter to the first direction;
a third toothed wheel (136) with teeth (134) which mesh with the teeth (78) of the other (70, 76) of the driving or driven toothed wheels (84; 70, 76) and with the teeth (132) of the second toothed wheel (108), the third toothed wheel (136) being rotatable about a second axis in a direction counter to the second direction;
and an arrangement for equivalent pretensioning of the first and second toothed wheel so that these rotate in opposite directions relative to one another.

4. Device according to Claim 3, characterized in that said pretensioning arrangement is a torsion spring (122) which acts between said first and second toothed wheel (92, 108).

5. Device according to Claim 4, which further comprises an arrangement for regulating said pretensioning arrangement, by means of which the force exerted by said pretensioning arrangement on said first and second toothed wheel (92, 108) is regulated.

6. Device according to Claim 5, wherein further a shaft (96) is mounted rotatably about said first axis, said first toothed wheel (92) is fastened on said shaft (96), said second toothed wheel (108) is mounted on said shaft (96) so that it is rotatable relative to said shaft (96) and said first toothed wheel (92), said torsion spring (122) comprises turns which surround said shaft (96), a part of said torsion spring (122) being connected to said shaft (96) and another part of said torsion spring (122) to said second toothed wheel (108).

7. Printing unit which comprises the following features:
a rubber-blanket cylinder (16) which is rotatable about its axis in a first direction;
a rubber-blanket cylinder toothed wheel (84) which is arranged coaxially and is rotatable with the rubber-blanket cylinder;
a plate cylinder (14) which is rotatable about its axis in a second direction counter to the first direction;
a plate cylinder toothed wheel (70, 76) which is arranged coaxially and is rotatable with the plate cylinder (14), the plate cylinder toothed wheel (70, 76) having teeth (72) which mesh with the teeth (86) of the rubber-blanket cylinder toothed wheel (84);
and a device for preventing play between the teeth (76, 72) of the cylinder toothed wheels (84); 70, 76), which comprises:
a first toothed wheel (92) with teeth (94) which mesh with the teeth (86) of one (84) of the cylinder toothed wheels (84; 70, 76), the first toothed wheel (92) being rotatable about a first axis in a direction of rotation counter to the direction of rotation of one (84) of the cylinder toothed wheels (84; 70, 76);
a second toothed wheel (108) which is arranged coaxially with the first toothed wheel (92) and is rotatable about the first axis relative to the first toothed wheel (92);
a third toothed wheel (136) with teeth (134) which mesh with the teeth (78) of the others (70, 76) of the cylinder toothed wheels (84; 70, 76) and with the teeth (132) of the second toothed wheel (108), the third toothed wheel (136) being rotatable about a second axis in a direction counter to the direction of rotation of the others (70, 76) of the cylinder toothed wheels (84, 70, 76);
and an arrangement for equivalent pretensioning of the first and second toothed wheel (92, 108) so that these rotate in opposite directions relative to one another.

8. Printing unit according to Claim 7, wherein an arrangement for regulating said pretensioning arrangement is provided, in order to regulate the force exerted by said pretensioning arrangement on said first and second toothed wheel (92, 108).

9. Printing unit according to Claim 7, characterized in that said teeth (86) of said rubber-blanket cylinder toothed wheel (84) and said teeth (72) of said plate cylinder toothed wheel (70, 76) are helically toothed.

## Revendications

1. Dispositif destiné à empêcher un jeu entre les dents en prise (86, 72) d'un pignon menant (84) rotatif dans un premier sens (26) autour d'un premier axe et d'un pignon mené (70, 76) qui est entraîné en rotation par le pignon menant (84) autour d'un second axe dans un second sens (28) qui est opposé au premier sens (26) et le dispositif ayant les particularités suivantes :
un dispositif de transmission au pignon menant (84) d'un premier couple de rotation qui oblige le pignon menant (84) à tourner dans un premier sens (26) ;
un dispositif de transmission au pignon mené (70, 76) d'un second couple de rotation qui oblige le pignon mené (70, 76) à tourner dans un sens opposé au second sens (28), un dispositif de génération des couples de rotation, la valeur du second couple de rotation et la valeur du premier couple de rotation étant identiques.

2. Dispositif selon la revendication 1, qui comprend par ailleurs un dispositif qui règle les valeurs desdits premier et second couples de rotation de la même manière et qui maintient ces valeurs identiques l'une par rapport à l'autre.

3. Dispositif destiné à empêcher un jeu entre les dents en prise (86, 72) d'un pignon menant (84) et d'un pignon mené (70, 76), qui a les particularités suivantes :
un premier pignon (92) comprenant des dents (94) qui engrènent avec les dents (86) de l'une (84) des roues d'entraînement menante ou menée (84 ; 70, 76), le premier pignon (92) étant rotatif dans un premier sens autour d'un premier axe ;
un second pignon (108) qui est disposé coaxialement au premier pignon (92) et qui est rotatif autour du premier axe par rapport au premier pignon (92) dans un second sens opposé au premier sens ;
un troisième pignon (136) comprenant des dents (134) qui engrènent avec les dents (78) de l'autre (70, 76) des roues dentées menante ou menée (84 ; 70, 76) et avec les dents (132) du second pignon (108), le troisième pignon (136) étant rotatif autour d'un second axe dans un sens opposé au second sens ;
et un dispositif de mise sous précontrainte identique des premier et second pignons de manière que ceux-ci tournent dans des sens opposés l'un par rapport à l'autre.

4. Dispositif selon la revendication 3,
caractérisé
en ce que ledit dispositif de mise sous précontrainte est un ressort de torsion (122) qui agit entre lesdits premier et second pignons (92, 108).

5. Dispositif selon la revendication 4, qui comprend par ailleurs un dispositif de réglage dudit dispositif de mise sous précontrainte, de manière que la force exercée par ledit dispositif de mise sous précontrainte sur ledit premier et ledit second pignons (92, 108) soit réglée.

6. Dispositif selon la revendication 5, dans lequel par ailleurs un arbre (96) est monté rotatif autour dudit premier axe, ledit premier pignon (92) est fixé sur ledit arbre (96), ledit second pignon (108) est monté sur ledit arbre (96) de manière qu'il soit rotatif par rapport audit arbre (96) et audit premier pignon (92), ledit ressort de torsion (122) comprend des spirales qui entourent ledit arbre (96), une partie dudit ressort de torsion (122) étant reliée audit arbre (96) et une autre partie dudit ressort de torsion (122) étant reliée audit second pignon (108).

7. Groupe d'impression qui a les particularités suivantes ;
un cylindre de blanchet (16) qui est rotatif dans un premier sens autour de son axe ;
un pignon (84) du cylindre de blanchet qui est disposé coaxialement à et rotatif avec le cylindre de blanchet ;
un cylindre porte-plaque (14) qui est rotatif autour de son axe dans un second sens opposé au premier sens ;
un pignon (70, 76) du cylindre porte-plaque qui est disposé coaxialement à et rotatif avec le cylindre porte-plaque (14), le pignon (70, 76) du cylindre porte-plaque comprenant des dents (72) qui engrènent avec les dents (86) du pignon (84) du cylindre de blanchet ;
et un dispositif destiné à empêcher un jeu entre les dents (76, 72) des pignons (84 ; 70, 76) des cylindres, qui comprend ;
un premier pignon (92) comportant des dents (94) qui engrènent avec les dents (86) de l'un (84) des pignons (84 ; 70, 76) des cylindres, le premier pignon (92) étant rotatif autour d'un premier axe dans un sens de rotation opposé au sens de rotation dudit un (84) des pignons (84 ; 70, 76) des cylindres ;
un second pignon (108) qui est disposé coaxialement au premier pignon (92) et rotatif autour du premier axe par rapport au premier pignon (92) ;
un troisième pignon (136) comportant des dents (134) qui engrènent avec les dents (78) de l'autre (70, 76) des pignons (84 ; 70, 76) des cylindres et avec les dents (132) du second pignon, le troisième pignon (136) étant rotatif autour d'un second axe dans un sens opposé au sens de rotation de l'autre (70, 76) des pignons (84 ; 70, 76) des cylindres ;
et un dispositif pour mettre sous précontrainte identique les premier et second pignons (92, 108) de manière que ceux-ci tournent en sens opposés l'un par rapport à l'autre.

8. Groupe d'impression selon la revendication 7, dans lequel est prévu un dispositif de réglage dudit dispositif de mise sous précontrainte pour régler la force exercée par ledit dispositif de mise sous précontrainte sur ledit premier et ledit second pignon (92, 108).

9. Groupe d'impression selon la revendication 7,
caractérisé
en ce que lesdites dents (86) dudit pignon (84) du cylindre de blanchet et lesdites dents (72) dudit pignon (70, 76) du cylindre porte-plaque sont des dentures hélicoïdales.
